(19) Europäisches Patentamt
European Patent Office
Office européen des brevets

(11) Publication number: **0 011 930**
**A1**

(12) # EUROPEAN PATENT APPLICATION

(21) Application number: 79302444.9

(22) Date of filing: 05.11.79

(51) Int. Cl.$^3$: C 08 L 23/04
C 08 J 5/18

(30) Priority: 24.11.78 CA 316880

(43) Date of publication of application:
11.06.80 Bulletin 80/12

(84) Designated Contracting States:
BE DE FR GB IT NL SE

(71) Applicant: C.I.L. Inc.
P.O. Box 10
Montreal, Quebec H3C 2R3(CA)

(72) Inventor: Eagles, Douglas Chester
9208 - 58th Street
Edmonton, Alberta(CA)

(72) Inventor: Doomernik, Marinus Augustinus
101 Dorchester Drive
Bramalea, Ontario(CA)

(74) Representative: Leng, Francis Edward et al,
Imperial Chemical Industries Limited Legal Department: Patents Thames House North Millbank
London SW1P 4QG(GB)

(54) **Blends of polyethylene and polybutene and films made from the blends.**

(57) Blends of low density polyethylene or ethylene vinyl acetate copolymers with a butene polymer having a molecular weight of 700 to 2000, preferably 700 to 1000. Films made from such blends have excellent cling and tack properties which make them suitable for use in self-sealing stretch wrapping and in self-sealing packaging.

EP 0 011 930 A1

BLENDS OF POLYETHYLENE AND POLYBUTENE AND FILMS MADE FROM THE BLENDS

This invention relates to blends of either low density polyethylene or ethylene vinyl acetate (EVA) copolymers with certain polymers of butene and to films from such blends that are suitable for use as self-sealing stretch wrapping film and self-sealing packaging film.

One technique for utilizing packages such as pallet loads is known as rotary stretch wrapping. This technique uses film which is wound under tension around the package by either rotating the package on a turntable or by winding the film around a stationary package. The films used for this technique are made from a variety of polymers including low density ethylene homopolymer (LDPE), ethylene vinyl acetate (EVA) copolymers containing from 2% to 12% by weight vinyl acetate and plastized polyvinyl chloride (PVC). The preferred characteristic of film used in rotary stretch wrapping is the ability to cling to itself sufficiently thereby self-sealing the wrap without the use of an adhesive or a heat sealing operation. Other important characteristics of film used in rotary stretch wrapping are toughness, stretchability and stress retention.

Self-sealing packaging films are used for wrapping display foods such as fresh meat cuts, bakery products and produce in supermarkets and for wrapping of various foods in the home such as sandwiches and salads. Self-sealing packaging films are made from a variety of resins including LDPE, EVA copolymers containing from 2% to 12% by weight vinyl acetate and plasticized PVC. The most important characteristic of self-sealing packaging films is its ability to cling to itself sufficiently to provide a wrap which does not require the use of an adhesive or heat sealing operation.

It is an object of this invention to provide blended polymeric olefinic materials of superior properties. Another object is to provide such blended materials which may be easily compounded in that they are comprised of a basic polymeric olefinic resin and a single modifier.

The blends of this invention consist essentially of a) from 90.0 to 98.0 per cent by weight of a polymer selected from polyethylene and copolymers of ethylene with from 1.0 to 9.0 per cent by weight of vinyl acetate, having a melt index (MI) in the range of 0.3 to 7.0 grams per 10 minutes and a density in the range of 917 to 933 $kg/m^3$, and b) from 10.0 to 2.0 per cent by weight of polybutene having a molecular weight of 700 to 2000.

A blend consisting entirely of the two components (a) and (b) as specified above provides excellent mechanical and cling properties. However additives may be incorporated if desired, e.g. antioxidants, UV stabilisers, dyes or pigments and antistatic additives. The antioxidants and UV stabilisers can prolong the life of films even though they do not improve its mechanical properties. Dyes and pigments can be used when coloured film is needed. If film becomes charged it may attract dust and this can be reduced by incorporating antistatic additives. It is emphasised that these additives affect only subsidiary properties; they do not affect the cling properties with which this invention is concerned.

Any conventional method affording products of suitable density, melt index and/or molecular weight may be used to prepare the two components of the blends. Polyethylene having a melt index of about 2 g/10 minutes and a density of about 921 $kg/m^3$ and EVA copolymer containing about 2.0 per cent by weight of VA have been found to provide the best results.

The blends of this invention may be prepared by many known blending methods. The two polymers may, for

example, be suitably blended by mixing at a temperature above their softening points on a device such as a roll mill or a Banbury mixer or an extruder mixer. Additives such as antioxidants and antifogging agents may be incorporated at the compounding stage.

Transformation of the blends into films with the desired cling and tackiness can be accomplished either by conventional blown tubular film extrusion or by chill roll cast film extrusion. Film extruded by the blown tubular method can be cooled by air blowers where the air is supplied either externally to the bubble, circulated within the bubble or a combination of both. The film can also be cooled by passing the extruded film (tubular or flat) through a water bath system. The water bath system or the chill roll cast method produces films that are more tacky, more elastic and have better optical properties.

Film extruded by the blown tubular method is normally slit along both edges thereby producing the two sheets of film. The two sheets are then separated and wound individually. The disadvantage of previously known films which exhibited cling and tackiness is the difficulty of separating and winding the two sheets of film. The films made from blends of this invention exbihit a delayed development of tackiness such that the ultimate tackiness is not achieved until approximately 24 hours after extrusion. This delay in development of tackiness allows for easier separation of the two sheets of film and thus easier handling during extrusion.

Films of suitable thickness, e.g. 10 to 200 microns preferably 20 to 50 microns, are thus obtained which, by virtue of their cling property are particularly useful in rotary stretch wrapping.

During rotary stretch wrapping, 2 or more layers of films are overlapped. The cling characteristic of the film made from the blends of this invention help it to

hold the film layers together by adhering one layer of the wrap to the next. This inter-layer adhesion allows the multi-layers of wrap to behave as a single, thicker layer thereby reinforcing it and increasing its toughness.

EXAMPLE 1

A blend was prepared with the following composition:-

| | |
|---|---|
| Polyethylene | 96% by weight |
| Polybutene | 4% by weight |

The polyethylene was a conventional film-forming polymer with MSI 2.3 and density 921 $kg/m^3$. The polybutene had a molecular weight of 1300 and it was derived from isobutene, i.e.

$$CH_2 = C(CH_3)_2$$

These items were mixed using a conventional internal bladed mixer.

The blend defined above was conventionally converted into tubular film and slit into slit flat film 25 microns thick. This film was used on a commercial rotary stretch wrap machine. It performed satisfactorily adhering to itself without the use of any adhesive.

EXAMPLE 2

A series of nine blends were prepared using varying amounts of polyethylene or EVA copolymer and polybutenes with the view to illustrating the above-defined ranges of melt index, density, molecular weight and VA content. Each blend was thereafter extruded into tubular blown film about 1 mil thick. The cling property of each film was then determined by the method described in A.S.T.M. D-3354. The particular features of each of the nine blends and the cling property of the films obtained are shown in the following Table.

TABLE

| Blend No. | Basic Polymer | Polybutene % by weight | Cling Property (Newtons) |
|---|---|---|---|
| 1 | EVA copolymer<br>3.5% VA<br>MI 0.8, d.92[illegible] | 5%<br>MW 900 | 0.16 |
| 2 | Polyethylene<br>MI 2.0<br>d. 918 | 2%<br>MW 900 | 0.13 |
| 3 | Polyethylene<br>MI 2.0<br>d.918 | [illegible]%<br>MW 900 | 0.70 |
| 4 | EVA copolymer<br>2% VA<br>MI 2.0, d.9[illegible] | 5%<br>MW 900 | 1.60 |
| 5 | EVA copolymer<br>6.5% VA<br>MI 3.0, d.931 | 4%<br>MW 900 | 1.50 |
| 6 | EVA copolymer<br>2% VA<br>MI 0.3, d.925 | 10%<br>MW 900 | 2.0 |
| 7 | EVA copolymer<br>3.5% VA<br>MI 2.0, d.926 | 10%<br>MW 750 | 2.0 |
| 8 | EVA copolymer<br>9.0% VA<br>MI 3.0, d.931 | 2%<br>MW 900 | 2.3 |
| 9 | Polyethylene<br>MI 7.0<br>d. 917 | 5%<br>MW 900 | 1.6 |

MI = melt index

d = density

MW = molecular weight

BAD ORIGINAL

CLAIMS

1. A polymer blend consisting essentially of
   (a) from 90.0 to 98.0 per cent by weight of a polymer selected from polyethylene and copolymers of ethylene with from 1.0 to 9.0 per cent by weight of vinyl acetate, having a melt index in the range of 0.3 to 7.0 grams per 10 minutes and a density in the range of 917 to 933 $kg/m^3$, and
   (b) from 10.0 to 2.0 per cent by weight of polybutene,

wherein said polybutene has a molecular weight of 1000 to 2000.

2. A polymer blend according to Claim 1, in which component (a) is a copolymer of ethylene and vinyl acetate and component (b) has a molecular weight of 700 to 1000.

3. A polymer blend according to Claim 2, in which component (f) has a molecular weight of 900.

4. A polymer blend according to Claim 1, in which component (a) is polyethylene and component (b) has a molecular weight of 1300.

5. A blend according to any one of Claims 1 to 4, which consists entirely of the two components (a) and (b) as specified.

6. A film made from a blend as claimed in any one of Claims 1 to 5.

0011930

European Patent Office

# EUROPEAN SEARCH REPORT

Application number
EP 79 30 2444

| DOCUMENTS CONSIDERED TO BE RELEVANT | | | CLASSIFICATION OF THE APPLICATION (Int Cl.) |
|---|---|---|---|
| Category | Citation of document with indication, where appropriate, of relevant passages | Relevant to claim | |
| | FR - A - 2 330 724 (SHOWA YUKA)<br>* Claims 1-6; claim 10 *<br>-- | 1,4,6 | C 08 L 23/04<br>C 08 J 5/18 |
| | FR - A - 2 277 852 (EXXON RESEARCH)<br>* Claims 1-14 *<br>-- | 1,2,4,6 | |
| | GB - A - 1 401 880 (EXXON RESEARCH)<br>* Claims 1-17 *<br>-- | 1,2,5,6 | TECHNICAL FIELDS SEARCHED (Int Cl.) |
| | GB - A - 1 472 059 (EXXON RESEARCH)<br>* Claims 1-25 *<br>-- | 1,2,6 | C 08 L 23/00<br>23/02<br>23/04<br>23/06<br>23/08 |
| P | GB - A - 2 003 487 (MITSUBISHI CHEMICAL)<br>* Claims 1-17 *<br>---- | 1,2,3,4,6 | C 08 J 5/18 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 06-03-1980 | GOOVAERTS |



BAD ORIGINAL